(19) **Europäisches Patentamt / European Patent Office / Office européen des brevets**

(11) **EP 2 272 742 B1**

(12) **EUROPEAN PATENT SPECIFICATION**

(45) Date of publication and mention
of the grant of the patent:
**11.12.2013 Bulletin 2013/50**

(51) Int Cl.:
**B62J 6/06** *(2006.01)* **B62J 6/08** *(2006.01)*

(21) Application number: **10168527.9**

(22) Date of filing: **06.07.2010**

(54) **Electronically controlled generator for a vehicle such as a bicycle**

Elektronisch gesteuerter Generator für ein Fahrzeug der Art eines Fahrrads

Générateur à contrôle électronique pour un véhicule du type bicyclette

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **06.07.2009 DK 200900829**

(43) Date of publication of application:
**12.01.2011 Bulletin 2011/02**

(73) Proprietor: **Reelight APS**
**8260 Viby J (DK)**

(72) Inventor: **Pedersen, Troels**
**2990 Nivå (DK)**

(74) Representative: **Plougmann & Vingtoft A/S**
**Rued Langgaards Vej 8**
**2300 Copenhagen S (DK)**

(56) References cited:
**WO-A1-2009/015910**

EP 2 272 742 B1

## Description

FIELD OF THE INVENTION

The invention relates to an induction generator, in particular to an induction generator for vehicles such as bicycles.

BACKGROUND OF THE INVENTION

Generators or dynamos used for bicycles are well known. Several different variants of generators exist, ranging from very simple dynamos where a multiple pole permanent magnet is rotated relative to a single coil via a small wheel in frictional engagement with the rim of the tire of the bicycle. Other types of generators are based on magnets which are attached directly to the wheel or tire and which induces a current in a coil which is attached to the frame of the bicycle. Yet another type of generator is based on simple multiple pole generators which are arranged in the hub of the front wheel.

WO 2009/015910 discloses, according to the respective preambles of claims 1 and 15, a generator for a bicycle. The generator has a driving magnet fixed to a wheel of the bicycle and an induction structure which is fixed to the frame of the bicycle. The induction structure comprises an induction magnet which is movably fixed to a coil. A fixture allows fixing of the magnets at locations where they, during normal operation of the bicycle, repeatedly moves towards and away from each other so that the driving magnet moves the induction magnet relative to the coil. To provide a generator which can potentially deliver a uniform output which is less dependent on a very specific installation of the generator, on the bicycle and which may therefore be easy to install, the generator further comprises a resetting magnet which provides positioning of the induction magnet relative to the coil when the driving magnet moves away from the induction magnet.

Whereas WO2009015910 shows improvements in comparison with known generators for bi-cycles, the use of a resetting magnet has some problems. For example, the strength of the resetting magnet has to be chosen carefully. That is, if it is too strong it may hinder efficient movement of the induction magnet, and if it is too weak it may not be able to position the induction magnet. Furthermore, since the air gap between the driving magnet and the induction magnet may depend on a particular generator installation so that the magnetic force provided by a driving magnet is not accurately known, the correct choice of the strength of the reset magnet may be further complicated.

Furthermore, the resetting magnet may disturb the magnetic flux generated by the induction magnet and thereby reduce the amplitude of current induced in the coil by the induction magnet.

Due to these problems the inventor of the present invention has appreciated that an improved induction generator is of benefit, and has in consequence devised the present invention.

SUMMARY OF THE INVENTION

It would be advantageous to achieve improvements for induction generators. In particular, it may be seen as an object of the present invention to provide a generator design that offers improved capabilities of power generation, or other problems, of the prior art.

To better address one or more of these concerns, in a first aspect of the invention an induction generator for a vehicle for generating electric current is presented: as defined by claim 1.

In other words an induction generator for a vehicle for generating electric current is presented, where the generator comprises first and second parts attachable to vehicle-parts, one of the vehicle-parts being moveably, e.g. rotatably, fixed relative to the other, the generator comprises

- an induction magnet fixed rotationally to the second part, where the induction magnet has first and second induction poles of opposite magnetic polarities,
- a driving pole fixed to the first part which is movable relative to the induction structure,
- a coil fixed to the induction structure, and
- an electronic controller connected to the coil, where
- the induction magnet is moveably, e.g. rotatably, arranged relative to the coil to enable induction of a current in the coil by motion of the magnetic poles,
- the driving pole is attachable to the moveable vehicle-part to enable the driving pole to repeatedly face the induction magnet, upon motion of the vehicle-part, so as to move the induction magnet by magnetic interaction between the poles of the first part and the induction magnet, and
- the electronic controller is configured for limiting or controlling the current in the coil during rotation of the induction magnet to enable the induction magnet to rotate at least 540 degrees in response to passage of the driving pole.

In an embodiment of the invention the induction magnet is positioned so that maximum rotation or movement, such as 180 degrees rotation, of the induction magnet is generated by the magnetic interaction between the induction pole and the driving pole of opposite magnetic polarities during passage of the driving pole.

In an embodiment of the invention the magnetic attraction of the induction magnet by the driving pole of opposite magnetic polarities causes motion of the induction magnet and induction of current in the coil.

In an embodiment of the invention the time for changing the current is determined in dependence of a fixed time interval.

In an embodiment of the invention the time for changing the current is determined in dependence of a time periodicity between passages of the at least first driving pole.

In an embodiment of the invention the time for changing the current is determined in dependence of an amount of energy supplied by the coil.

In an embodiment of the invention the electronic controller comprises a storage for storing electric energy from the coil.

In an embodiment of the invention the electronic controller is configured for determining a time period between succeeding passages of the driving pole or succeeding driving poles.

In an embodiment of the invention the electronic controller is configured for adjusting the rotation speed of the induction magnet between succeeding passages of the driving pole or succeeding driving poles by adjusting the current in the coil.

An embodiment of the invention comprises first and second driving poles, where the arc length s between geometric centres of the first and second driving poles of the first part is equal to, or substantially equal to the arc length s' between magnetic centres of two poles of the induction magnet, so that motion of the first and second driving poles by an arc length s cause angular motion of the induction magnet by the same or substantially the same arc length s' measured between magnetic centres of two poles of the induction magnet.

An embodiment of the invention comprises a magnetic conductive structure arranged to guide a magnetic flux from the induction magnet to the coil.

In an embodiment of the invention the magnetic conducting structure comprises an extremity located relative to the induction magnet for enabling magnetic attraction of one or the poles of the induction magnet.

A second aspect of the invention relates to a bicycle comprising an induction generator according to the first aspect.

A third aspect of the invention relates to a method for generating electric current for a vehicle using an induction generator as defined by claim 15.

In summary the invention relates to a generator for a bicycle. The generator has one or more driving magnets fixed to a wheel of the bicycle and an induction structure that is fixed to a frame part of the bicycle. The induction structure comprises an induction magnet and a coil. A fixture allows fixing of the driving magnets at locations where they, during operation of the bicycle, repeatedly moves towards and away from the induction magnet. The generator comprises an electronic controller re-orienting the induction magnet so that it is optimally oriented when a driving magnet approaches. Such electronic re-orientation may be achieved by adjusting the current in the coil, e.g. by limiting, increasing or generally controlling the current to change the magnetic interaction between a pole of the coil and the poles of the induction magnet.

In general the various aspects of the invention may be combined and coupled in any way possible within the scope of the invention. These and other aspects, features and/or advantages of the invention will be apparent from and elucidated with reference to the embodiments described hereinafter.

BRIEF DESCRIPTION OF THE DRAWINGS

Embodiments of the invention will be described, by way of example only, with reference to the drawings, in which

     Figs. 1A-C illustrate a principle of operation of the induction generator,
     Fig. 2 illustrates a generator mounted to a bi-cycle,
     Fig. 3 illustrates the current generated by the generator,
     Fig. 4 shows a generator comprising a magnetic conductive element for improving magnetic interaction between the coil and the induction magnet,
     Fig. 5 shows an electronic controller or positioning or re-orientation of the induction magnet,
     Fig. 6 shows driving magnets arranged with a fixed separation,
     Fig. 7 illustrates a general operation principle of the generator,
     Figs. 8-9 show embodiments using magnetic conductive elements, and
     Fig. 10 shows a prior generator with a permanent reset magnet.

DETAILED DESCRIPTION OF EMBODIMENTS

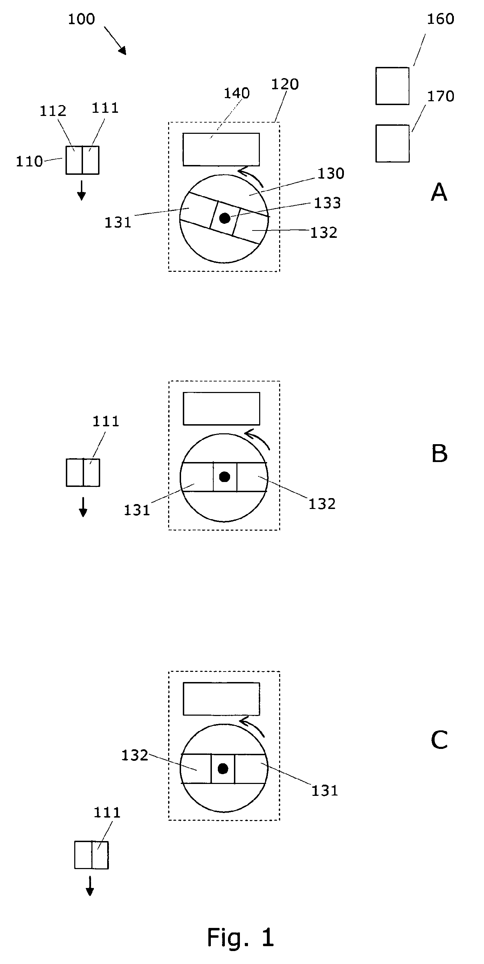

Fig. 1A shows an induction generator 100 for a vehicle for generating electric current. The generator comprises first and second parts 110,120 where the first part is normally mounted on a moveable part of the vehicle and the second part 120 is normally mounted on a stationary part of the vehicle.

The first part 110 comprises a least one first driving pole 111, e.g. a magnetic north pole or a south pole. As an example, the first part 110 may be a permanent magnet comprising two poles 111,112 of opposite magnetic polarities, where one of the poles 111 is arranged to face the second part 120 when the first part passes the second part.

The second part 120 comprises an induction magnet 130 with first and second magnetic poles 131,132 of opposite magnetic polarities and a coil 140.

The coil may be a solenoid or other coil with windings of electrically conducting wire arranged to be subjected to the magnetic field of the induction magnet 130 so as to enable generation of an electric current. The electric current may be supplied via output wires of the coil to a lamp 160 of the vehicle or other electrical consumers 160. The electrical consumer 160 may be comprised by the generator 100, e.g. it may be integrated with the second part 120, or the electrical consumer 160 may be a separate device such as a lamp connectable with the generator 100.

The induction generator 100 further comprises an electronic controller 170 for controlling the orientation of the induction magnet 130 between passages of a driving pole 111. The electronic controller 170 will be described in detail below.

The induction magnet may be rotatably arranged relative to the coil. As illustrated the induction magnet may be rotatably hinged via an axis 133. However, generally, the induction magnet may be moveably arranged, e.g. slideably arranged on a guide and/or spring biased to enable a reciprocal back and forth motion.

The motion or rotation of the induction magnet relative to the coil 140 generates variations in direction and strength of the magnetic field generated by poles 131, 132. The magnetic variations induce an induction current in the coil 140.

The first part 110 is suited for mounting on a moveable part of the vehicle, e.g. a part that reciprocates back and forth or rotates relative to a stationary part of the vehicle onto which the second part 120 may be mounted.

Accordingly, the first part may be arranged on the movable vehicle-part to enable the first and second poles 111,112 of the first part 110 to alternately face the induction magnet 130, upon motion of the vehicle-part and, thereby, cause the induction magnet 130 to move due to magnetic interaction between the pole 111 of the first part and the poles 131,132 of the induction magnet.

Fig. 1A shows a situation where the first pole 111 of the first part 110 is approaching the induction magnet 130. In this situation the induction magnet may be oriented arbitrarily, i.e. the position of the first and second poles 131, 132 relative to the poles 111,112 of the first part 110 is not known.

During the period when the first driving pole 111 approaches the induction magnet 130 the first driving pole 111 will affect the position of the induction magnet due to magnetic interaction between driving and induction poles 111,131,132 so that when the first driving pole 111 faces the first induction pole 131, the induction magnet have moved or rotated so that the pole of the induction magnet 130 which faces the driving pole 111 has a magnetic polarity (e.g. a north pole) which is opposite to the polarity of the driving pole 111. That is, the driving pole will attract an induction pole of opposite polarity which forces the induction magnet to move until opposite magnetic poles faces. This is illustrated in Fig. 1B where the driving pole 111 and the induction pole 131 have opposite polarities.

For instance if the first induction pole 131 is closest to the first driving pole 111 and the induction pole 131 and the first driving pole 111 have opposite magnetic polarities, then the induction magnet 130 will rotate so that the induction pole 131 will face the first driving pole 111 of opposite polarity. Accordingly, it may happen that the induction magnet 130 only rotates a few degrees and, consequently, the magnetic field from the induction magnet changes only little and only little current will be induced in the coil 140. Oppositely, if a pole 131,132 of opposite polarity corresponding to the polarity of the first driving pole 111 was positioned farthest away from the first driving pole, then the approaching movement of the first part 110 would cause the induction magnet 130 to rotate approximately 180 degrees so that the magnetic field from the induction magnet would change maximally and consequently a maximal current will be induced in the coil 140.

Due to the uncertainty of the position of the induction magnet 130 is it not guaranteed that a maximum amount of current will be generate during passage of the first driving magnet.

Fig. 1D shows the situation where the first driving pole 111 moves away from the induction magnet 130. Due to the kinetic energy or rotation energy of the induction magnet, the induction magnet may continue to rotate and generate induction current for a certain time or until the first driving pole 111 or other driving pole approaches the induction magnet again.

For maximizing the amount of energy generated by the induction generator 100, the induction magnet 130 should ideally be oriented so that the magnetic attraction of the driving pole 111 and an induction pole 131,132 generates maximum rotation or movement of the induction magnet 130 during the attraction of an induction pole 131 of opposite magnetic polarity. Accordingly, for an induction generator 100 comprising two induction poles 131,132 of opposite magnetic polarities, the induction magnet 130 should ideally be oriented so that an induction pole 131,132 faces or points towards the approaching driving pole 101 and so that the driving pole and the adjacent induction pole have identical magnetic poles; or in other words the induction pole 132 which is farthest away from driving pole should have a polarity opposite to the polarity of the driving pole.

For an induction generator 100 comprising four, six or more induction poles 131,132, the induction magnet 130 should generally be positioned so that maximum rotation of the induction magnet is generated due to the action of a driving pole.

The positioning of the induction magnet 130 is controlled by the electronic controller 170.

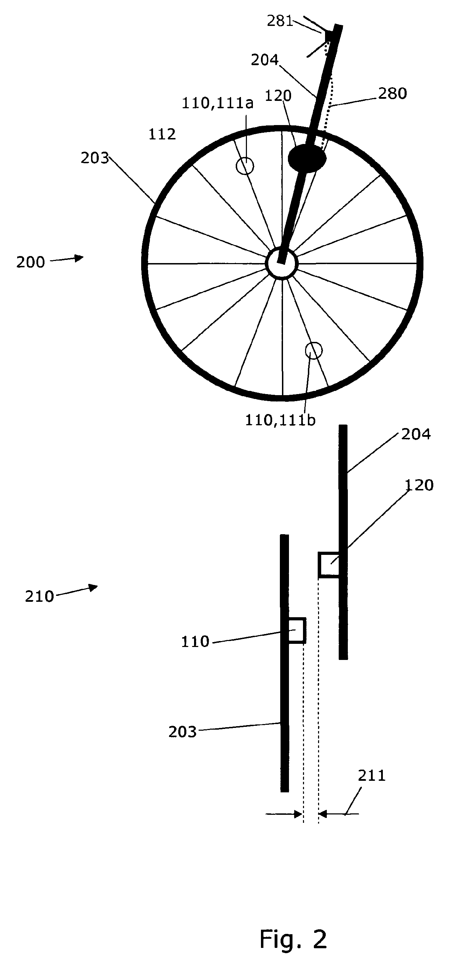

Fig. 2 shows a side view 200 of a bicycle where the first part 110 of the generator 100 is mounted on a first vehicle part 203, e.g. the spokes of a wheel 203 and the second part 120 is mounted on a second vehicle part 204, e.g. on the front fork 204. Here both first and second driving poles 111a, 111b are used. The first and second driving poles 111a, 111b may oriented so that they both have a north or south pole facing the second part upon passage, or the may be oriented so that they have different poles facing the second part 120. When the wheel 203 rotates, the driving poles 111a, 111b of the first part 110 will repeatedly pass the induction magnet 130 of the second part 120 so that a current is repeatedly generated in the coil 140. The current from the coil may power a lamp 281 connected to the coil 140 via a wire 280. The lamp 281 could also be integrated with a housing which houses the coil and the induction magnet. The induction current may also be used to power a bi-cycle computer, a data transmitter, a data receiver, or a sensor, e.g. for sensing speed of the bicycle.

The first and second part 110,120 may be attachable to the vehicle-parts 203, 204 via first and second fixing structures (not shown) such as conventional mounting means, e.g. metal fittings. The vehicle part 203, 204 may be provided with one or more first parts and possibly also one or more second parts.

Fig. 2 also shows a front view 210 which shows that the first part 110 and the second part 120 are mechanically separated by a distance 211. Thus, since the first part is not mechanically connected with the second part, any frictional losses between the two generator parts 210,220 are eliminated.

It is understood that alternatively the second part 120 may be mounted on the wheel 203 and the first part 110 may be mounted on the fork 204, so the movement of the first part relative to the second part generates an electric current in the coil. Thus, it is clear that the relative motion of the first part 110 and the second part 120 generates electric current, whether the first part 110 or the second part 120 is mounted on a rotatable vehicle-part.

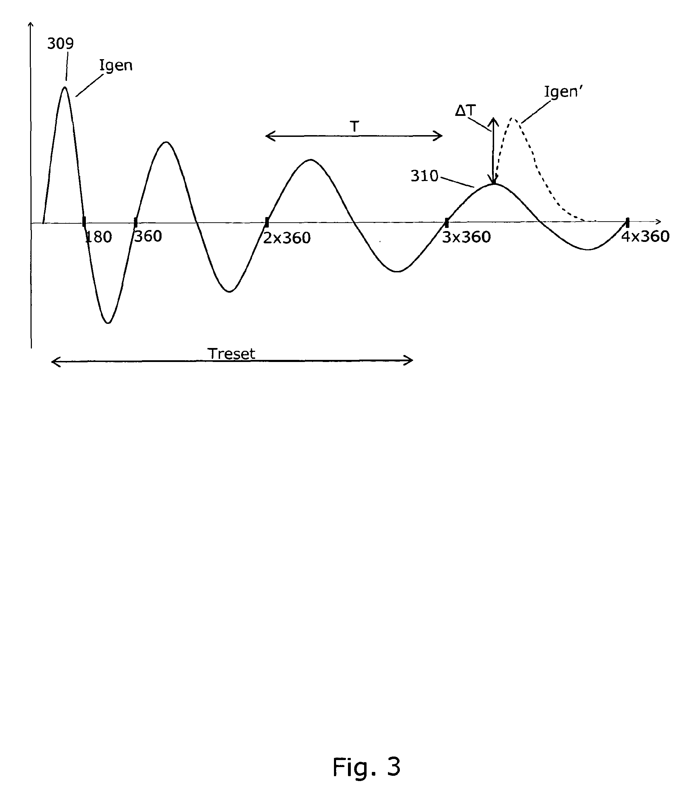

Fig. 3 shows a graph 300 showing the current Igen supplied to a load 160 by the coil 140 in response to induction by the induction magnet 130. The abscissa indicates the angular position of the induction magnet in degrees, where 360 degrees correspond to one full rotation of the induction magnet. Thus, the current 300 is shown for four full rotations of the induction magnet. The ordinate indicates the current value.

Initially the induction magnet 130 is at still (however, it could also be rotating), and therefore the current is zero. It is assumed that the induction pole 132 is positioned so that attraction generated by the oppositely polarised driving pole causes the induction magnet to rotate 180 degrees during the approach and passage of the driving pole 111. Therefore, during the passage of the driving pole a half period of current is generated during the initial 180 degrees rotation of the induction magnet 130 as shown in Fig. 3. After the passage of the driving pole 111, the induction magnet may continue rotating, due to its kinetic energy, from the angular position of 180 degrees to 360 degrees so that a second half period of current is induced. After the position at 360 degrees the induction magnet may continue to rotate. Thus, Fig. 3 shows that the induction magnet continues to rotate with at least three full rotations from the position at 360 degrees to the position at 4x360=1440 degrees. During the rotation from the position at 180 degrees until still stand of the induction magnet, the rotation speed decreases (the rotation period T increases), and the induced current amplitude decreases. The induction magnet may continue rotating until the next driving pole approaches again or the induction magnet may stop before the next or the same induction pole approaches again. It may be an advantage that the induction magnet is still rotating when a driving pole approaches again, since the driving pole 111 may generate a higher rotation speed of the induction magnet 130 compared to the situation where the induction magnet is at still. However, this may require that the position of the induction magnet is synchronised with the passage of the driving pole 111.

During the initial forced rotation caused by magnetic interaction with the driving pole 111 and the subsequent free rotation enabled by the induction magnet's kinetic energy, electric energy is produced which may be supplied to the electrical consumer via electrical connections to the coil 140. Additionally the coil, e.g. ends of the wire which forms the coil, may be conned to the electronic controller 170.

The electronic controller 170 is capable of changing the current in the coil so as to generate a predetermined current change, e.g. causing a particular current direction, in the coil for positioning of the induction magnet between passages of the at least first driving pole.

Established electro-magnetic theory and Lenz's law which say: "In case of a change in a magnetic system, that thing happens which tends to oppose the change", in Foundations of Electromagnetic Theory, 4th edition, J. R. Reitz, F. J. Milford, R. W. Christy, 1993, Addison-Wesley.

Accordingly, if the electronic controller 170 changes the load of the coil 140, the current in the coil will change. The coil will attempt to oppose the current change by changing its magnetic flux.

The relationship between a change in current I in the coil and a change of magnetic flux Φ is given by:

$$\frac{\partial \Phi}{\partial t} = L \frac{\partial I}{\partial t}$$

where L is the inductance of a coil. Accordingly, the current I can be changed so that a desired change in the magnetic flux Φ is generated. Since the required change in the current I is dependent on the induced current Igen, the required change of the amplitude of current I in the coil and the required time for generating the change, may be determined by monitoring of the induced current Igen. Such a monitor (not shown) may be comprised by the electronic controller 170.

In order to determine the required change of the amplitude of current I in the coil and the required point in time for generating the change, the electronic controller or monitor may comprise a peak detector for detecting peaks 310 of the induced current. Depending on the time between passages of a driving pole 111, the electronic controller may be configured to detect a peak 310 after a time period Treset, after a number of previous peaks have been detected, or after a certain amount of power has been supplied to the consumer 160. When the peak 310 has been detected the electronic controller may change the electric load of the coil 140, e.g. increasing or decreasing the load, to cause a sudden increase or decrease $\Delta I$ in the induction current Igen. The change $\Delta I$ in the current in the coil causes a change in the magnetic flux of the coil 140 and thereby the magnetic poles of the coil. The generated magnetic field of the coil caused by the adjusted load, interacts with the magnetic poles of the induction magnet 130 and causes the induction magnet to stop as shown by the induction current Igen' which rapidly approached zero as shown in Fig. 3.

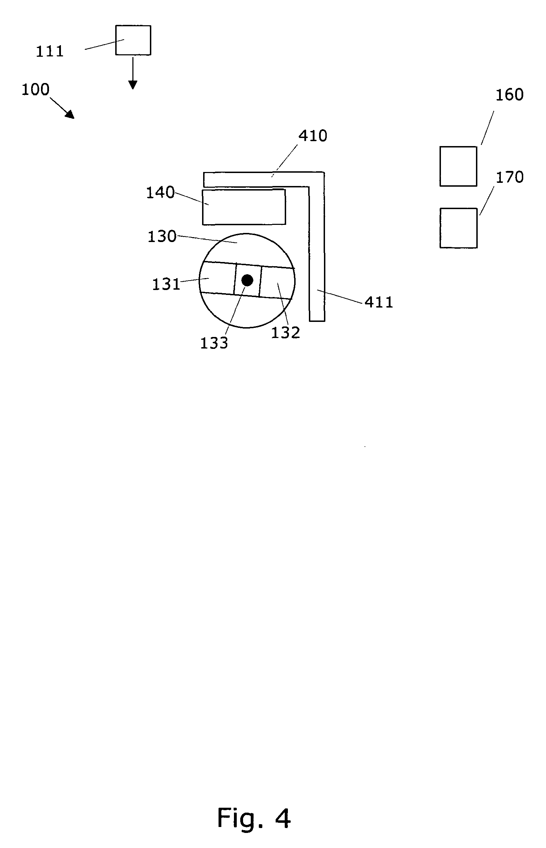

In order to ensure an efficient magnetic interaction between the coil 140 and the induction magnet 130 and to ensure that induction magnet is optimally positioned the coil 140 may be provided with magnetically conducting structure 410, as shown in Fig. 4, which magnetically connects the coil with the induction magnet. The magnetically conducting structure 410 may be provided with an extremity 411 located close the induction magnet. Accordingly, by causing a change in the current $\Delta I$ in the coil so as to generate a predetermined current change, such as a change in current direction and current amplitude, the coil 140 generates a magnetic pole which attracts one of the induction poles 131,132, possibly via the extremity 411 of the structure 410, so that a desired positioning of the induction magnet between passages of the at least first driving pole is achieved. Thus, in the configuration of the generator shown in Fig. 4, the current change $\Delta I$ should generate a magnetic pole of the coil with a polarisation which attracts a pole 131 of the induction magnet having a polarisation opposite to the polarisation of the driving pole 111, so that maximum movement, e.g. 180 degrees rotation, is achieved when the driving pole 111 approaches the induction magnet 130.

The generation of the current change $\Delta I$ may be invoked by the detection of a peak 310 where the timing for detection of the peak is determined as described above. Alternatively, the current change $\Delta I$ may be determined in dependence of a fixed time interval, e.g. a fixed time after the first peak 309 of the induction current Igen, or in dependence of an amount of energy supplied by the coil, or in dependence of a time periodicity between passages of the at least first driving pole 111. According to the latter, the time periodicity between passages of the at least first driving pole 111 may be determined by measuring the time between succeeding first peaks 309 of the induction current Igen.

The changing of the load by the electronic controller 170 for generation a change in the current $\Delta I$ may be performed by increasing or decreasing the amount of power supplied to the electrical consumer 160, by supplying a current Igen to a storage such as a capacitor or for example by short circuiting the output terminals of the coil 140.

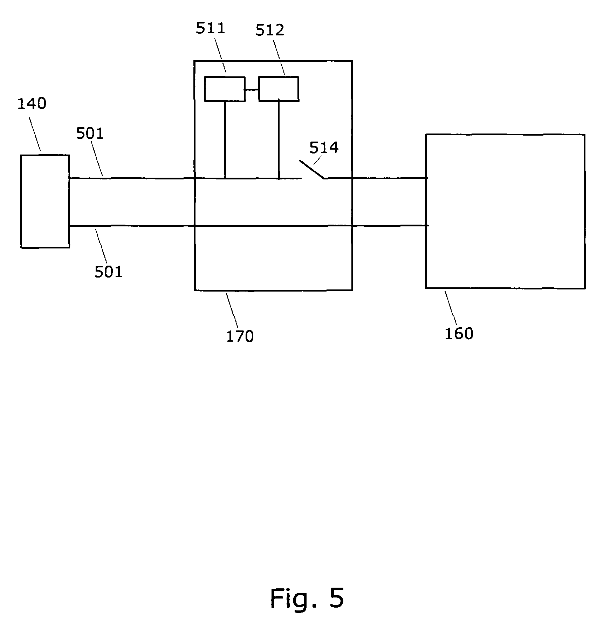

Fig. 5 shows an alternative embodiment for changing the current in the coil for positioning of the induction magnet. The electronic controller 170 comprises a monitor 511 for determining the instant for changing the current in the coil by monitoring e.g. the time periodicity of passages of the at least first driving pole, the occurrence of the first peak 309, the amount of power supplied to the electrical consumer 16 or the occurrence of a particular peak 310. For example, the monitor 511 may set as a fixed time interval for changing the current in dependence of detection of some event, such as the first peak 310 generated during the passage of the driving pole 111. The controller 170 further comprises a storage 160, e.g. a capacitor, for storing electric energy, e.g. supplied by the coil 140.

When the generator 100 produces energy to be consumed by the electrical consumer 160, switch 514 is closed. Some of the electric energy from the coil 140 may be stored by the storage 512 which may also be used as an energy storage for the consumer 160. When the monitor 511 detects an event such as a peak 310, the event triggers a state change where switch 514 is opened and a current is supplied to the coil 140 from the storage 512 via a switch (not shown) which is closed. The coil will generate magnetic poles depending on the direction of the current from the storage 512. Thus, by supplying a current from the storage 512 to the coil 140 the current in the coil is changed, and the magnetic poles of the coil generated in response to the current change are used for positioning of the induction magnet between passages of the at least first driving pole.

According to another embodiment, the storage 512 may be seen as a load, e.g. a capacitive load, inductive load or resistive load which is connected to the coil 140 (the switch 514 may be closed or open) via a switch (not shown) in response to an event detected by the monitoring device 511 as previously described. The sudden change of the load causes a change in the magnetic poles of the coil 140 which can be used for positioning of the induction magnet 130.

It is understood that the controller 170 and the electrical consumer 160 may be separate devices or integrated a single device or electronic circuit.

The electronic controller 170 may be configured for determining the time Tcyc between succeeding passages of a driving pole 111 by determining the time between succeeding first peaks 309, i.e. peaks which shows a higher amplitude than peaks 310 generated due to the free rotation of the induction magnet. First peaks 309 may be distinguished from other peaks by use of a combined threshold and peak detector. With knowledge of the time Tcyc between succeeding passages of the driving pole 111 or poles, the time for the passage of the subsequent driving pole is known and, therefore, the instant for positioning of the induction magnet by generation of a change in the coil current Igen can be timed or synchronised with the time period Tcyc between passages of a driving pole. It is understood that more than one driving pole 111 may be used. For example, first and second driving poles 111a, 111b may be fixed to the wheel of a bi-cycle and, in that case, the time Tcyc between succeeding passages is the time between passage of the first and second driving poles 111a, 111b.

With knowledge of the time delay between passages of a single driving pole or between succeeding poles, the rotation speed of the induction magnet 130 may adjusted so that the induction magnet is optimally positioned but still moving when the next driving pole 111 approaches. Again, optimally positioned means that the induction pole 131 which is attracted by the driving pole 111 should be positioned so as to generate maximum motion of the induction magnet, e.g. the induction pole 131 should be located farthest away from the approaching driving pole 111 with opposite magnetic polarisation. The adjusting of the rotation speed of the induction magnet may be performed by adjusting or generating changes of the current Igen in the coil during short time intervals, e.g. by temporarily activating the load 512 or continuously varying the electrical load on the coil, where the load may be the electrical consumer 160 or the load 512 . The rotation speed of the induction magnet and its actual position can be determined from the coil current Igen, e.g. by detection of peaks 310 and the time delay between succeeding peaks 310. Alternatively, the position and velocity of the induction magnet may be determined from an encoder connected to the induction magnet. In this way the rotation velocity and position of the induction magnet may be adjusted once or a plurality of times to obtain the desired position when the next driving pole 111 approaches.

Thus, as the time delay between passages of a driving pole is known, the time delay Tnext for passage of the next driving pole can be estimated. With knowledge of the rotation velocity and position of the induction magnet, it is possible to determine a desired velocity of the induction magnet which provides that poles of the induction magnet are positioned in a desired way when the next pole passes.

Fig. 5 shows an embodiment where the first part 110 comprises first and second poles 111,112 which are arranged with a fixed separation of s, measured as an arc length or a linear distance between geometric or magnetic centres 180 of the poles. The first and second poles 111,112 may be arranged in a fixed relationship. E.g. the poles 111,112 may be fixed to a magnetically conducting plate or other material.

As indicated in Fig. 5, the corresponding arc length between magnetic centres 180 of the driving poles 131,132 is given by s'.

By matching the arc length s between geometric centres 180 of the first and second driving poles 111,112 to the arc length s' between magnetic centres 180 of the induction poles 131, 132 it may be ensured that the poles of the induction magnet 130 are optimally positioned relative to the second driving pole 112, i.e. the pole which passes the induction magnet after the first driving pole.

For example the arc lengths s and s' may be selected to be equal or substantially equal, so that passage of the first and second driving poles 111,112, causes rotation of the induction magnet by the same or substantially the same arc length s' as the arc length between the driving poles. In this way a synchronisation or gearing between the driving poles 111,112, and the induction poles 131,132 is obtained, where the gearing ration is substantially given by the ratio s/s'. When the induction magnet 140 is formed as a cylinder as shown, the arc length s between magnetic centres of driving poles 111,112 may be selected to be equal to half of the circumference of the cylinder, or equal to the diameter of the cylinder of induction magnets.

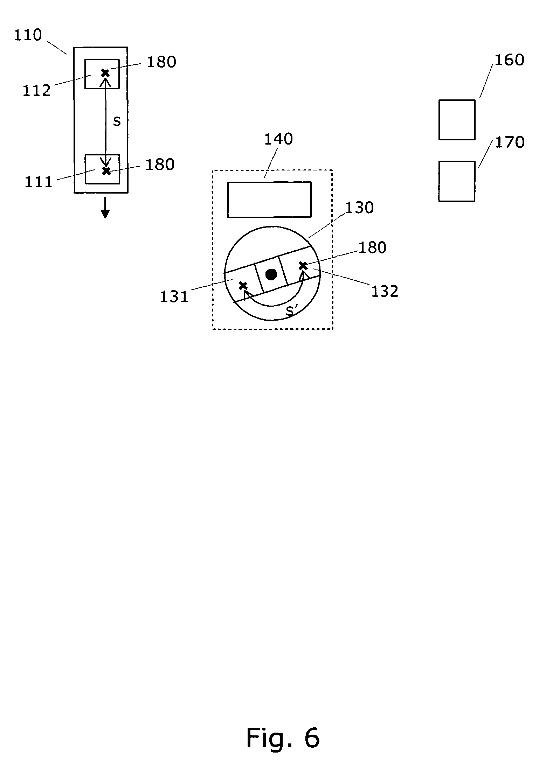

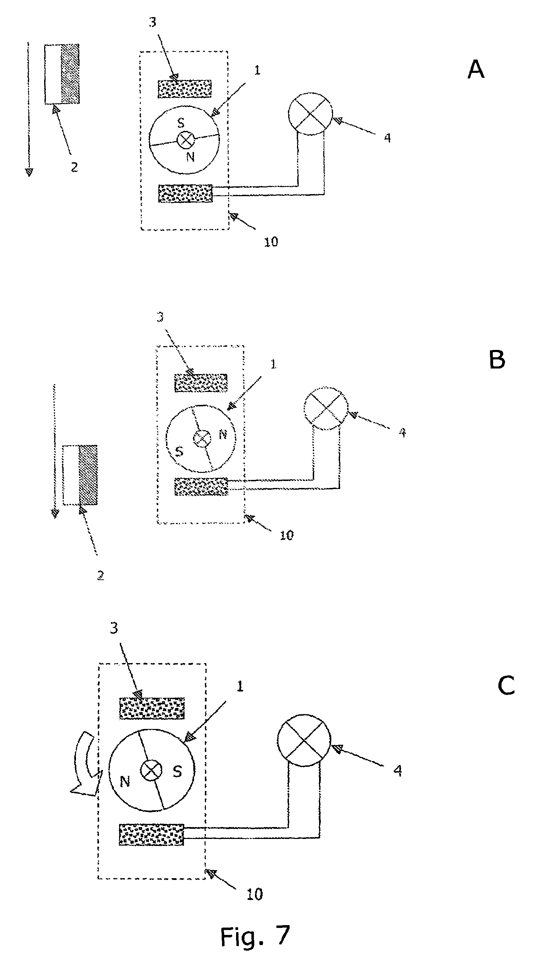

As an alternative, the induction generator 100 of Figures 1-6 will now be explained with reference to Figures 7-9.

Fig. 7A-C illustrates a generator system comprising an induction magnet 1, hinged via an induction structure 10. The induction structure further comprises a coil 3. The coil is connected to a light emitting element 4 that can be any kind of light emitting device e.g. a LED or a light bulb. The induction structure is preferably attached to the frame of the bicycle as well as the light emitting device, but attachment of the induction structure to the wheel is also possible. A driving magnet 2 is preferably attached to a driving structure attached to the wheel of the bicycle. The driving magnet gives the induction magnet a rotation as it passes, due to magnetic forces acting between the two magnets. As the driving magnet passes with a certain speed, the induction magnet also builds up speed, which builds up energy in the induction magnet. As the driving magnet has passed the induction magnet, and no longer influence on this, the induction magnet keeps turning due to that the only braking effect acting on the induction magnet, is friction in the bearings and energy taken from the system through the coil. If this current is kept small enough the induction magnet will be able to turn 540 degrees or more before the next driving magnet passes. Fig. 7B shows what happens when the driving magnet has almost passed the induction magnet; the induction magnet has not moved more than e.g. 60 degrees, but speed has built up in induction magnet. Fig. 7C illustrates that the induction magnet keeps rotating after the driving magnet has passed.

In some systems working in a narrow interval of speed for the driving magnet, it has been shown that having a large driving magnet, and a smaller induction magnet is preferred, as the system can be designed to give a large resonance effect in the middle of the interval, i.e. the for a given interval of speed values of the driving magnet, and for a given ratio of magnetic strengths of the driving and induction magnets, maximum rotation speed of the induction magnet is achieved. Accordingly, the generator can be optimised for specific driving speeds of e.g. bicycles, e.g. a narrow range from 15 to 25 km/h.

If the system will have to work in large intervals of speed, e.g. as on a bicycle, driving between 0 and 40 km/h, it has been shown that a large induction magnet is preferred as this may better have the large inertia and by that fulfil many rotation each time a driving magnet passes.

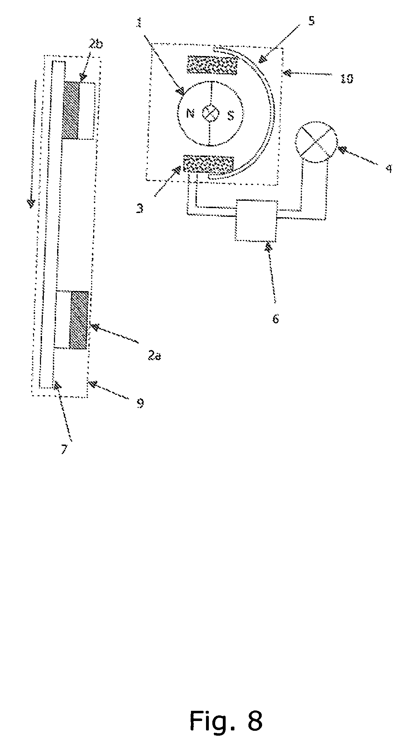

Fig. 8 shows an alternative embodiment of the invention. In this embodiment two magnets 2a and 2b are attached to a magnetic conductive element 7. Further the embodiment comprises a magnetic conductive element 5 that increases the overall magnetic flux in the system. The system also comprises an electric circuit 6 that controls the extraction of energy from the coil. As the driving magnets 2a, 2b passes the induction magnet 1 the distance and strength and the orientation of the two magnets determines how the induction magnet can be accelerated. The distance between the driving magnets and the induction magnet is preferably in the range of 2-15 mm. The movement of the induction magnet can further be optimised as the electronic circuit 6 (equivalent to electronic controller 170) e.g. can switch on or off current flowing in the coil, or regulate the amount of current taken from the coil in order for the induction magnet to end in a desirable position or speed before the passing of the next driving magnet 2b. Further the coil may be short circuit to instant brake the coil in order to obtain a desirable position before the passage of the second driving magnet 2b.

Thus, the electronic controller 6,170 is capable of changing the current flowing through the winding of the coil, e.g. by changing the electrical load (512, 160, 4) which the coil is loaded by or by injecting a current to the coil, so as to generate a change in the magnetic flux and the magnetic poles of the coil for positioning of the induction magnet between passages of the at least first driving pole.

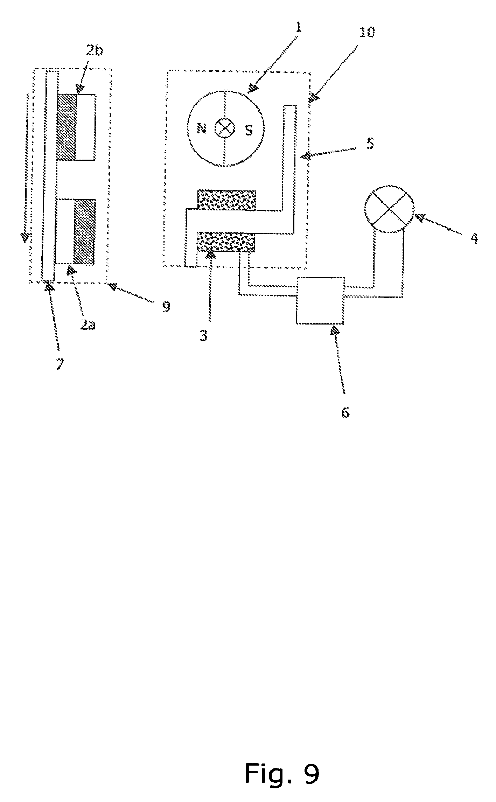

Figure 9 shows an alternative embodiment where the coil 3 is wound around the magnetic conductive element 5. This could be due to considerations of the space or form factor of the system, giving a more compact system. Further the drawing shows that the magnetic conductive element 5 is designed so it may interact more significantly with the driving magnets 2a, 2b and the induction magnet 1.

In Fig. 7-9, the induction structure holds the coil, as this may be wound around areas of the induction structure. Further the induction structure features rotational bearing of the induction magnet, allowing the induction magnet to rotate freely e.g. 540 degrees and more. The induction structure may be some kind of plastic housing attachable to the frame of the bicycle. The induction structure may also hold a lamp e.g. a LED, or it may have some other kind of lamp-structure. The induction structure may finally have space or the possibility to have a magnetic conductive element mounted. This element helps to direct the magnetic flux from the induction coil in order to increase the magnetic flux in the coil increasing power output of the generator.

The axis of rotation of the induction magnet may be angled in any angle when compared to the path of the driving magnet. The angle is fixed in the induction structure and will not alter during ride. Preferred the angle is 90 degrees either with the axis being radially oriented or having the axis almost parallel to the path of the driving magnet.

Different versions of generators for bicycle lamps can be thought accordingly to the invention, e.g. letting the induction magnet turn for so long that another - or the same driving magnet passes again - giving the induction magnet another push to speed up rotations. In this way the induction magnet will turn all the time during ride of the bicycle.

The electronic circuit 6,170 is provided for intelligent control of the current in the coil 3,140 may be configured to calculate or estimate the amount of energy to be extracted from the coil in order for the induction coil to end up in a position favourable for the next driving magnet 2,111 to interact as it approaches the induction structure. Similarly, the electronic circuit may be configured to determine speed of the driving magnet, orientation and/or speed of the induction magnet, time delay between passages of the driving magnet 2,111, and time points for affecting the current change in the coil.

As in one aspect of the invention the induction magnet may turn approximately 540 degrees as one driving magnet passes so that the next, i.e. the second driving magnet, may interact with induction magnet. E.g. the second driving magnet having an opposite direction of polarisation so it may fit with the induction magnet polarisation which is also turned due to the 1 1/2 turns.

In another aspect of the invention two or more driving magnets may be attached to a magnetic conductive element. The magnetic conductive element will provide a magnetic amplifying and therefore help saving cost for the driving magnet without decreasing the strength of it. The magnetic conductive element may further help to position too magnets in the correct distance from each other.

E.g. the two driving magnets will have opposite magnetic polarisation. By this interesting patterns of movement of the induction magnet may be obtained. As an example the first driving magnet may give the first kick to the induction magnet followed by another kick as the second driving magnet starts to interact, giving the induction magnet so much rotational energy that electric energy can be extracted in a long period after the driving magnets has passed. This will give a much longer period of light emitting, helping the user to be seen.

Further it is shown that many half periods of induction current is more easily converted into rectified current as the maximum current is limited to the longer period of extraction.

The electronics attached to the coil may be a circuit rectifying the current coming from the coil, or it may be other kinds of electronic circuits that transform the current coming from the coil.

In one embodiment there is no electronic circuit between the coil and the light emitting element. Consequently the light element being an LED, bulb or any other type of light emitting element only lights whenever the coil is generating current.

The locations where the driving magnet and the induction structure are fixed to the bicycle may, as mentioned already, advantageously be a location on the wheel and a location on the frame. It could also be a location on one of the crank shafts and a location on the frame, or a location on one of the pedals. The driving magnet or induction structure could be fixed to the wheel and the other one of the driving magnet and the induction structure could be fixed to the frame. It would, however, often be an advantage to fix the induction structure to the frame rather than to an element that rotates.

The induction magnet is preferably rotationally hinged to the coil so that the induction of a current occurs under rotational movement of the induction magnet relative to the coil. By suitable dimensioning and suspension of the induction magnet relative to the coil, it may be facilitated that the induction magnet moves freely without interference from obstacles during the rotation relative to the coil. This facilitates a silent generator and less wear.

The induction magnet could be hinged using roller bearings or bearings of any other type, including magnetic bearings or sliding bearings. In one embodiment, the induction structure comprises a housing forming a sealed chamber which houses the coil, the induction magnet, and optionally also the magnetic conductive element. The chamber may be filled with an anticorrosive, e.g. a thin liquid solution, e.g. oil.

The coil and the induction magnet may further be equipped with a magnetic conductive element to help guiding magnetic flux. This magnetic element will increase the magnetic flux going through the coil. The magnetic conductive element has preferred a design that does not influence on the movement of the induction magnet, e.g. giving any positions of the induction magnet where it prefers to be when the driving magnet is far away.

In one embodiment, the induction magnet comprises two magnetic elements arranged on opposite sides of a core of a magnetically conductive material. This provides a larger induction magnet by use of smaller permanent magnets.

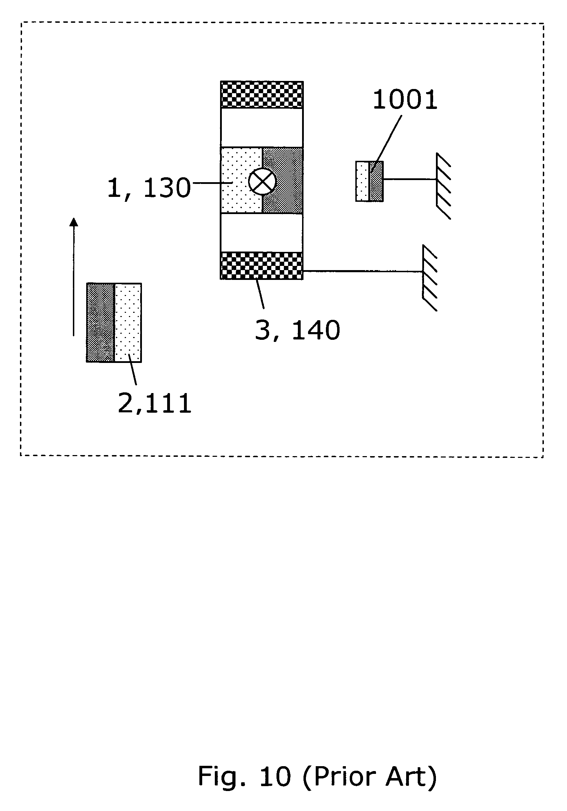

In comparison with the induction generator described in WO2009/015910 the present invention may have some advantages. Fig. 10 shows the induction generator of WO2009/015910 which comprises a driving pole or magnet 2,111 and an induction structure with an induction magnet 1,130 arranged to induce current in a coil 3, 140 and a resetting magnet 1001. In WO2009/015910 the resetting magnet ensures that the induction magnet always returns to a desirable position after passing of the driving magnet. The position is determined by the position of the resetting magnet and the direction of the resetting magnet. This ensures that there are no 'dead zones' where induction is limited at certain speeds due to resonance phenomenon. However, the resetting magnet must not be too strong compared to the strength of the driving magnet in the wheel, as this will prevent the induction magnet to be rotated by the driving magnet as it passes nearby. This is of course depending on the size of the gap of air between the driving magnet and the induction magnet compared to the size of air gap between the induction magnet and the resetting magnet. The gap of air between the resetting magnet and the induction magnet is preferably fixed, whereas the size of the gap of air between the driving magnet and the induction magnet is varying e.g. due to installation precision.

If the resetting magnet is too weak flip back speed of the induction magnet is reduced significantly which reduces the overall energy produced during induction. Therefore the resetting magnet must have a balanced strength compared to the induction magnet. As a result the production and installation is problematic.

Secondly in WO2009/015910 the generator may work as a flip/flop rotating one way as the driving magnet is close, and flipping back as the driving magnet is moved away. The result is an oscillating induction magnet that in the end will need a tremendous magnetic force in order to stop and to be flipped back in time before the next driving magnet passes.

Furthermore, in WO2009/015910 it may be difficult to get a high magnetic flux through the coil as the resetting magnet disturbs the field from the induction magnet. This is due to the fact that the resetting magnet must have a polarization orientation opposite, or partly opposite, to the polarization of the induction magnet whenever the driving magnet is in a position where it controls the position (rotation) of the induction magnet. Consequently the resulting magnetic flux through the coil is reduced, leading to poorer performance.

Finally, in WO2009/015910 the switch rotation between the two positions takes place very rapidly which reduces the time during which energy is produced. A short time of energy discharging from the coil results in reduced efficiency when tried to rectify due to large currents, or result in very short flashes when used directly to drive e.g. a light emitting diode.

In comparison with WO2009/015910 the generator of the present invention may potentially deliver a more prolonged induction scheme since the induction magnet is able to rotate for a longer time since no permanent reset magnet is used.

Further the generator of the present invention may be less dependent on the size of air gap between the induction magnet and the driving magnet, and by that less depended on a very specific installation of the generator on the bicycle.

The load or electronic circuit of the present invention is designed to load the coil in a way that helps the induction magnet to turn 540 degrees or more when a driving magnet passes nearby it. At 540 degrees of rotation the coil will produce three induction half periods instead of only two half periods produced by a generator using a reset magnet according to WO2009/015910.

Thus the time scale of which energy can be extracted is prolonged by 50% leading to a 50% improvement in energy production which may generate a higher intensity of a bicycle lamp. The multiple rotations of the induction magnet can extend the period where a bi-cycle lamp can be powered by the generator so that e.g. a better light is obtained. Furthermore, longer time is provided for the electronics to convert the energy into e.g. rectified current.

Further aspects and embodiments of the invention relates to:

A method of providing power to a bicycle lamp comprising:

- fixing an induction magnet 1 rotationally to an induction structure 10,
- providing a driving magnet 2 which is movable relative to the induction structure in a driving path sufficiently close to the induction magnet to influence the position of the induction magnet relative to the induction structure,
- fixing a coil 3 to the induction structure sufficiently close to the induction magnet to induce an electrical current in the coil upon rotation of the induction magnet relative to the induction structure, and
- connecting the coil to the lamp,

where the induction magnet is turned at least 540 degrees by one passage of the induction magnet with the driving magnet moving in the driving path.

A generator for a bicycle lamp comprising:

- an induction magnet 1 fixed rotationally to an induction structure 10,
- a driving magnet 2 fixed to a driving structure 9 which is movable relative to the induction structure,
- a coil 3 fixed to the induction structure 10, and
- a light emitting device 4 e.g. one or more LED's or a bulb with or without an electronic control of coil load,

where the induction magnet is arranged to turn at least 540 degrees if passed by a driving magnet.

A generator where the coil 3 is wound around the induction magnet, allowing the induction magnet to rotate.

A generator where the electric current running in the coil 3 during rotation of the induction magnet is limited or controlled to allow the induction magnet to rotate 540 degrees or more.

A generator where the strength of the driving magnet is higher than that of the induction magnet e.g. due to that the driving magnet is larger, or is having a larger coercivity, or opposite that the driving magnet is weaker than the induction magnet.

A generator where there may be more than one driving magnet e.g. mounted to the wheel of a bicycle, and which driving magnets may have the same or different magnetic orientation in the direction towards the induction magnet.

A generator where the induction structure includes a rotational bearing for the induction magnet e.g. a roller bearing or gliding bearing, and which induction structure also holds features to secure lubrication of the rotational bearing, e.g. by having the induction magnet enclosed in a chamber filled or partly filled with oil of any type.

A generator where the induction magnet and/or the driving magnet is made of any type of material with permanent magnetization properties such as BariumFerrit or Neodymium magnets.

A generator where the induction structure may additionally have a magnetic conductive element 5 to increase the magnet flux in the induction magnet.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other electronic unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

**Claims**

1. An induction generator (100) for a bicycle for generating electric current, the generator comprises first and second parts (9, 10, 110,120) attachable to bicycle-parts (203, 204), one of the vehicle-parts being rotatably fixed relative to the other, where

   - the first part (9, 110) comprises at least a first driving pole (2, 111),
   - the second part (10, 120) comprises an induction magnet (1, 130) with first and second induction poles (131,132) of opposite magnetic polarities and a coil (3, 140), where the induction magnet is moveably arranged relative to the coil to enable induction of a current in the coil by motion of the magnetic poles,
   - the first part is attachable to the rotatable bicycle-part to enable the driving pole (2, 111) to repeatedly face the induction magnet (1, 130), upon motion of the vehicle-part, so as to move the induction magnet by magnetic interaction between the at least first driving pole (111) of the first part and the poles (131,132) of the induction magnet, **characterised in that**,
- the induction generator further comprises an electronic controller (170, 6) connected to the coil, where the controller is capable of changing the current in the coil so as to generate a change in the magnetic flux of the coil for positioning of the induction magnet between passages of the at least first driving pole.

2. An induction generator according to claim 1, where the induction magnet is rotably arranged relative to the coil.

3. An induction generator according to claim 2, where the induction magnet (130) is positioned so that maximum rotation or movement, such as 180 degrees rotation, of the induction magnet is generated by the magnetic interaction between the induction pole (131) and the driving pole (111) of opposite magnetic polarities during passage of the driving pole.

4. An induction generator according to any of the preceding claims, where the magnetic attraction of the induction magnet (130) by the driving pole (111) of opposite magnetic polarities causes motion of the induction magnet and induction of current in the coil.

5. An induction generator according to any of the preceding claims, where the time for changing the current is determined in dependence of a fixed time interval.

6. An induction generator according to any of the preceding claims, where the time for changing the current is determined in dependence of a time periodicity between passages of the at least first driving pole.

7. An induction generator according to any of the preceding claims, where the time for changing the current is determined in dependence of an amount of energy supplied by the coil.

8. An induction generator according to any of the preceding claims, where the electronic controller comprises a storage for storing electric energy from the coil.

9. An induction generator according to any of the preceding claims, where the electronic controller (170) is configured for determining a time period between succeeding passages of the driving pole (111) or succeeding driving poles.

10. An induction generator according to any of the preceding claims, where the electronic controller (170) is configured for adjusting the rotation speed of the induction magnet (130) between succeeding passages of the driving pole (111) or succeeding driving poles by adjusting the current in the coil.

11. An induction generator (100) according to any of the preceding claims 2-10, comprising first and second driving poles (111,112) where the arc length (s) between geometric centres of the first and second driving poles of the first part is equal to, or substantially equal to the arc length (s') between magnetic centres of two poles of the induction magnet, so that motion of the first and second driving poles (111,112) by an arc length (s) cause angular motion of the induction magnet by the same or substantially the same arc length (s') measured between magnetic centres of two poles of the induction magnet.

12. An induction generator (100) according to any of the preceding claims, comprising a magnetic conductive structure (410) arranged to guide a magnetic flux from the induction magnet to the coil (140).

13. An induction generator (100) according to claim 12, where the magnetic conducting structure (410) comprises an extremity (411) located relative to the induction magnet (130) for enabling magnetic attraction of one or the poles (131,132) of the induction magnet.

14. A bicycle comprising an induction generator according to claim 1.

15. A method for generating electric current for a bicycle using an induction generator (100), the generator comprises first and second parts (110,120) attachable to vehicle-parts (203, 204), one of the bicycle-parts being moveably, e.g. rotatably, fixed relative to the other, where

- the first part (110) comprises at least a first driving pole (111),
- the second part (120) comprises an induction magnet (130) with first and second induction poles (131,132) of opposite magnetic polarities and a coil (140) with windings of electrically conducting wire, where the induction magnet is moveably arranged relative to the coil to enable induction of a current in the coil by motion of the magnetic poles, the method comprising
- arranging the first part on the moveable vehicle-part and moving the vehicle-part so that the at least first driving pole (111) repeatedly passes the induction magnet (130) so that the induction magnet is moved by magnetic interaction between the at least first driving pole (111) of the first part and the poles (131,132) of the induction magnet, **characterised in that** the method further comprises,

- changing the current in the coil so as to generate a change in the magnetic flux of the coil for positioning of the induction magnet between passages of the at least first driving pole.

**Patentansprüche**

1. Induktionsgenerator (100) für ein Fahrrad zum Erzeugen von elektrischem Strom, wobei der Generator ein erstes und ein zweites an Fahrradteilen (203, 204) befestigbares Teil (9, 10, 110, 120) umfasst, wobei eines der Fahrzeugteile drehbar im Verhältnis zu dem anderen befestigt ist, wobei

   - das erste Teil (9, 110) mindestens einen ersten Antriebspol (2, 111) umfasst,
   - das zweite Teil (10, 120) einen Induktionsmagneten (1, 130) mit einem ersten und einem zweiten Induktionspol (131, 132) entgegengesetzter magnetischer Polarität und eine Spule (3, 140) umfasst, wobei der Induktionsmagnet beweglich im Verhältnis zur Spule angeordnet ist, um die Induktion eines Stroms in der Spule durch die Bewegung der magnetischen Pole zu ermöglichen,
   - das erste Teil an dem drehbaren Fahrradteil befestigbar ist, um zu ermöglichen, dass der Antriebspol (2, 111) durch Bewegung des Fahrzeugteils wiederholt gegenüber dem Induktionsmagneten angeordnet ist, um den Induktionsmagneten durch magnetische Wechselwirkung zwischen dem mindestens ersten Antriebspol (111) des ersten Teils und den Polen (131, 132) des Induktionsmagneten zu bewegen, **dadurch gekennzeichnet, dass**
   - der Induktionsgenerator weiterhin eine mit der Spule verbundene elektronische Steuerung (170, 6) umfasst, wobei die Steuerung den Strom in der Spule derart verändern kann, dass eine Änderung des Magnetflusses der Spule zur Positionierung des Induktionsmagneten zwischen den Passagen des mindestens ersten Antriebspols generiert wird.

2. Induktionsgenerator nach Anspruch 1, wobei der Induktionsmagnet drehbar im Verhältnis zur Spule angeordnet ist.

3. Induktionsgenerator nach Anspruch 2, wobei der Induktionsmagnet (130) so positioniert ist, dass durch die magnetische Wechselwirkung zwischen dem Induktionspol (131) und dem Antriebspol (111) entgegengesetzter magnetischer Polarität während des Passierens des Antriebspols eine Höchstdrehung oder - bewegung, wie eine 180-Grad-Drehung, des Induktionsmagneten generiert wird.

4. Induktionsgenerator nach einem der vorhergehenden Ansprüche, wobei die magnetische Anziehung des Induktionsmagneten (130) durch den Antriebspol (111) entgegengesetzter magnetischer Polarität eine Bewegung des Induktionsmagneten und eine Induktion von Stroms in der Spule generiert.

5. Induktionsgenerator nach einem der vorhergehenden Ansprüche, wobei die Zeit für die Änderung des Stroms in Abhängigkeit von einem festen Zeitintervall ermittelt wird.

6. Induktionsgenerator nach einem der vorhergehenden Ansprüche, wobei die Zeit für die Änderung des Stroms in Abhängigkeit von einer zeitlichen Periodizität zwischen den Passagen des mindestens ersten Antriebspols ermittelt wird.

7. Induktionsgenerator nach einem der vorhergehenden Ansprüche, wobei die Zeit für die Änderung des Stroms in Abhängigkeit von einer von der Spule bereitgestellten Energiemenge ermittelt wird.

8. Induktionsgenerator nach einem der vorhergehenden Ansprüche, wobei die elektronische Steuerung einen Speicher zum Speichern elektrischer Energie von der Spule umfasst.

9. Induktionsgenerator nach einem der vorhergehenden Ansprüche, wobei die elektronische Steuerung (170) zum Ermitteln einer Zeitdauer zwischen aufeinanderfolgenden Passagen des Antriebspols (111) oder aufeinanderfolgenden Antriebspolen konfiguriert ist.

10. Induktionsgenerator nach einem der vorhergehenden Ansprüche, wobei die elektronische Steuerung (170) zum Anpassen der Drehgeschwindigkeit des Induktionsmagneten (130) zwischen zwischen aufeinanderfolgenden Passagen des Antriebspols (111) oder aufeinanderfolgenden Antriebspolen durch Anpassen des Stroms in der Spule konfiguriert ist.

11. Induktionsgenerator (100) nach einem der vorhergehenden Ansprüche 2-10, umfassend einen ersten und einen zweiten Antriebspol (111, 112), wobei die Bogenlänge (s) zwischen den geometrischen Mittelpunkten des ersten und des zweiten Antriebspols gleich oder im Wesentlichen gleich der Bogenlänge (s') zwischen magnetischen Mittelpunkten von zwei Polen des Induktionsmagneten ist, sodass eine Bewegung des ersten und des zweiten Antriebspols (111, 112) über eine Bogenlänge (s) eine Winkelbewegung des Induktionsmagneten über die gleiche oder im Wesentlichen gleiche zwischen magnetischen Mittelpunkten von zwei Polen des Induktionsmagneten gemessene Bogenlänge (s') verursacht.

**12.** Induktionsgenerator (100) nach einem der vorhergehenden Ansprüche, umfassend eine magnetisch-leitfähige Struktur (410), die dazu vorgesehen ist, einen Magnetfluss von dem Induktionsmagneten zur Spule (140) zu führen.

**13.** Induktionsgenerator (100) nach Anspruch 12, wobei die magnetisch-leitfähige Struktur (410) eine im Verhältnis zu dem Induktionsmagneten (130) angeordnete Extremität (411) zum Ermöglichen der magnetischen Anziehung eines der Pole (131, 132) des Induktionsmagneten umfasst.

**14.** Fahrrad, umfassend einen Induktionsgenerator nach Anspruch 1.

**15.** Verfahren zum Erzeugen von elektrischem Strom für ein Fahrrad unter Verwendung eines Induktionsgenerators (100), wobei der Generator ein erstes und ein zweites an Fahrzeugteilen (203, 204) befestigbares Teil (110, 120) umfasst, wobei eines der Fahrradteile beweglich, z.b. drehbar, im Verhältnis zu dem anderen befestigt ist, wobei

- das erste Teil (110) mindestens einen ersten Antriebspol (111) umfasst,
- das zweite Teil (120) einen Induktionsmagneten (130) mit einem ersten und einem zweiten Induktionspol (131, 132) entgegengesetzter magnetischer Polarität und eine Spule (140) mit Windungen aus elektrisch leitfähigem Draht umfasst, wobei der Induktionsmagnet beweglich im Verhältnis zur Spule angeordnet ist, um die Induktion eines Stroms in der Spule durch die Bewegung der magnetischen Pole zu ermöglichen, wobei das Verfahren umfasst
- Anordnen des ersten Teils des beweglichen Fahrzeugteils und Bewegen des Fahrzeugteils, sodass der mindestens erste Antriebspol (111) wiederholt den Induktionsmagneten (130) passiert, sodass der Induktionsmagnet durch magnetische Wechselwirkung zwischen dem mindestens ersten Antriebspols (111) des ersten Teils und den Polen (131, 132) des Induktionsmagneten bewegt wird, **dadurch gekennzeichnet, dass** das Verfahren weiterhin umfasst
- Ändern des Stroms in der Spule, sodass eine Änderung des Magnetflusses der Spule zur Positionierung des Induktionsmagneten zwischen Passagen des mindestens ersten Antriebspols generiert wird.

**Revendications**

**1.** Générateur à induction (100) pour bicyclette destiné à générer du courant électrique, le générateur comprenant une première et une deuxième pièce (9, 10, 110, 120) pouvant être fixées sur des pièces de bicyclette (203, 204), l'une des pièces de véhicule étant montée de manière rotative par rapport à l'autre, dans lequel

- la première pièce (9, 110) comprend au moins un premier pôle d'entraînement (2, 111),
- la deuxième pièce (10, 120) comprend un aimant inducteur (1, 130) possédant un premier et un deuxième pôle inducteur (131, 132) à polarité magnétique opposée et une bobine (3, 140), l'aimant inducteur étant disposé de manière mobile par rapport à la bobine pour permettre l'induction d'un courant dans la bobine par mouvement des pôles magnétiques,
- la première pièce peut être fixée sur la pièce de bicyclette rotative afin que le pôle d'entraînement (2, 111) puisse se trouver de manière répétitive face à l'aimant inducteur (1, 130), lors du mouvement de la pièce de véhicule, de manière à déplacer l'aimant inducteur par interaction magnétique entre l'au moins un premier pôle d'entraînement (111) de la première pièce et les pôles (131, 132) de l'aimant inducteur, **caractérisé en ce que** :
- le générateur à induction comprend en outre un contrôleur électronique (170, 6) raccordé à la bobine, le contrôleur étant capable de modifier le courant dans la bobine de manière à générer une modification du flux magnétique de la bobine pour le positionnement de l'aimant inducteur entre les passages de l'au moins un premier pôle d'entraînement.

**2.** Générateur à induction selon la revendication 1, dans lequel l'aimant inducteur est disposé de manière rotative par rapport à la bobine.

**3.** Générateur à induction selon la revendication 2, dans lequel l'aimant inducteur (130) est positionné de manière à ce que la rotation ou le mouvement maximum, tel(le) qu'une rotation de 180 degrés, de l'aimant inducteur soit généré(e) par l'interaction magnétique entre le pôle inducteur (131) et le pôle d'entraînement (111) à polarité magnétique opposée lors du passage du pôle d'entraînement.

**4.** Générateur à induction selon l'une quelconque des revendications précédentes, dans lequel l'attraction magnétique de l'aimant inducteur (130) par le pôle d'entraînement (111) à polarité magnétique opposée déclenche le mouvement de l'aimant inducteur et l'induction de courant dans la bobine.

**5.** Générateur à induction selon l'une quelconque des revendications précédentes, dans lequel le moment auquel le courant est modifié est déterminé selon un intervalle de temps fixe.

**6.** Générateur à induction selon l'une quelconque des revendications précédentes, dans lequel le moment auquel le courant est modifié est déterminé selon une périodicité temporelle entre les passages de l'au moins un premier pôle d'entraînement.

**7.** Générateur à induction selon l'une quelconque des revendications précédentes, dans lequel le moment auquel le courant est modifié est déterminé en fonction d'une quantité d'énergie fournie par la bobine.

**8.** Générateur à induction selon l'une quelconque des revendications précédentes, dans lequel le contrôleur électronique comprend un système de stockage pour stocker l'énergie électrique provenant de la bobine.

**9.** Générateur à induction selon l'une quelconque des revendications précédentes, dans lequel le contrôleur électronique (170) est configuré pour déterminer une période de temps entre des passages successifs du pôle d'entraînement (111) ou des pôles d'entraînement successifs.

**10.** Générateur à induction selon l'une quelconque des revendications précédentes, dans lequel le contrôleur électronique (170) est configuré pour ajuster la vitesse de rotation de l'aimant inducteur (130) entre des passages successifs du pôle d'entraînement (111) ou des pôles d'entraînement successifs en ajustant le courant dans la bobine.

**11.** Générateur à induction (100) selon l'une quelconque des revendications 2 à 10, comprenant un premier et un deuxième pôle d'entraînement (111, 112), dans lequel la longueur d'arc (s) entre les centres géométriques du premier et du deuxième pôle d'entraînement de la première pièce est égale, ou essentiellement égale, à la longueur d'arc (s') entre les centres magnétiques des deux pôles de l'aimant inducteur, de manière à ce que le mouvement du premier et du deuxième pôle d'entraînement (111, 112) suivant une longueur d'arc (s) déclenche un mouvement angulaire de l'aimant inducteur suivant la même ou essentiellement la même longueur d'arc (s') mesurée entre les centres magnétiques des deux pôles de l'aimant inducteur.

**12.** Générateur à induction (100) selon l'une quelconque des revendications précédentes, comprenant une structure magnétiquement conductrice (410) disposée pour guider un flux magnétique de l'aimant inducteur vers la bobine (140).

**13.** Générateur à induction (100) selon la revendication 12, dans lequel la structure magnétiquement conductrice (410) comprend une extrémité (411) qui est située par rapport à l'aimant inducteur (130) de manière à permettre l'attraction magnétique de l'un ou des pôles (131, 132) de l'aimant inducteur.

**14.** Bicyclette comprenant un générateur à induction selon la revendication 1.

**15.** Méthode destinée à générer du courant électrique pour une bicyclette utilisant un générateur à induction (100), le générateur comprenant une première et une deuxième pièce (110, 120) pouvant être fixées sur des pièces de véhicule (203, 204), l'une des pièces de bicyclette étant montée de manière mobile, par exemple de manière rotative, par rapport à l'autre, dans laquelle

 - la première pièce (110) comprend au moins un premier pôle d'entraînement (111),
 - la deuxième pièce (120) comprend un aimant inducteur (130) possédant un premier et un deuxième pôle inducteur (131, 132) à polarité magnétique opposée et une bobine (140) possédant des enroulements de fil conducteur d'électricité, l'aimant inducteur étant disposé de manière mobile par rapport à la bobine pour permettre l'induction d'un courant dans la bobine par mouvement des pôles magnétiques, la méthode comprenant
 - la disposition de la première pièce sur la pièce de véhicule mobile et le déplacement de la pièce de véhicule de manière à ce que l'au moins un premier pôle d'entraînement (111) passe de manière répétitive devant l'aimant inducteur (130) afin que l'aimant inducteur soit déplacé par interaction magnétique entre l'au moins un premier pôle d'entraînement (111) de la première pièce et les pôles (131, 132) de l'aimant inducteur, **caractérisée en ce que** la méthode comprend en outre
 - une modification du courant dans la bobine de manière à générer une modification du flux magnétique de la bobine pour le positionnement de l'aimant inducteur entre les passages de l'au moins un premier pôle d'entraînement.

Fig. 1

281
204
120
280
110,111a
112
203
200
110,111b

204
120
210
110
203
211

Fig. 2

Fig. 3

Fig. 4

Fig. 5

Fig. 6

Fig. 7

Fig. 8

Fig. 9

1001

1, 130

3, 140

2,111

Fig. 10 (Prior Art)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009015910 A

**Non-patent literature cited in the description**

- In case of a change in a magnetic system, that thing happens which tends to oppose the change. **J. R. REITZ ; F. J. MILFORD ; R. W. CHRISTY.** Foundations of Electromagnetic Theory. Addison-Wesley, 1993